Europäisches Patentamt

European Patent Office

Office européen des brevets

(19)

(11) Numéro de publication : **0 519 789 A1**

## (12) DEMANDE DE BREVET EUROPEEN

(21) Numéro de dépôt : **92401624.9**

(22) Date de dépôt : **11.06.92**

(51) Int. Cl.⁵ : **F16F 13/00,** F16F 1/38, B60G 17/027, B60G 7/00

(30) Priorité : **19.06.91 FR 9107632**

(43) Date de publication de la demande : **23.12.92 Bulletin 92/52**

(84) Etats contractants désignés : **AT BE CH DE DK ES FR GB GR IT LI LU NL PT SE**

(71) Demandeur : **CAOUTCHOUC MANUFACTURE ET PLASTIQUES 143 bis, rue Yves Le Coz F-78000 Versailles (FR)**

(72) Inventeur : **De Fontenay, Etienne 4, route de Moulins F-58300 Decize (FR)** Inventeur : **Parisot, Patrick 24, place de Beaume F-78990 Elancourt (FR)**

(54) **Dispositif pilote de liaison élastique assurant des rigidités différenciées par chambre tubulaire piézo-raidie.**

(57) Dispositif piloté de liaison élastique assurant le filtrage antivibratoire suivant deux rigidités différentes d'un train de suspension de véhicule, ledit dispositif comportant, noyée dans un bloc en composition élastomérique (10) qui relie élastiquement les armatures de fixation (1) et (7), une chambre tubulaire piézo-raidie (11), c'est à dire déformable en l'absence de pression mais capable de bloquer la déformabilité transversale dans un rapport d'au moins 3 sous l'effet d'une pression hydraulique envoyée dans l'ensemble tubulaire équipé d'embouts (12).

Application au domaine des suspensions de véhicules.

FIG.1

EP 0 519 789 A1

Jouve, 18, rue Saint-Denis, 75001 PARIS

L'invention est du domaine des pièces de liaison élastique, à base d'élastomères, assurant un filtrage antivibratoire entre un élément de chassis de véhicule automobile, auquel est fixé un train de suspension, et la caisse rigide ou carrosserie dudit véhicule, lorsqu'est recherchée la modification, en fonction des circonstances, de la rigidité de ladite liaison élastique.

L'industrie automobile, améliorant sans cesse la qualité de l'isolation de l'habitacle contre les vibrations issues du train de roulement, tout en perfectionnant, par ailleurs, la précision de la trajectoire dont la qualité donne la "tenue de route", de nouvelles pièces apparaissent sur les véhicules modernes pour assurer une élasticité antivibratoire entre le véhicule et le train de roulement ou "liaison au sol".

La basse rigidité en toutes directions, nécessitée par un bon filtrage des vibrations, entre en contradiction avec les efforts importants transmis de façons statique et dynamique par les roues. En particulier, un train arrière monté élastiquement, donc avec une certaine souplesse, introduit, en virage, des microbraquages que l'art du constructeur consiste à maîtriser, par une modification appropriée de la cinématique assurant le débattement des roues.

Comme décrit dans le document EP 028 692 de PORSCHE, des déformations géométriques notables des pièces élastiques de filtrage sont acceptables, leur effet étant compensé dans la trajectoire géométriquement imposée par la cinématique des liaisons déformables.

Ainsi le document EP 0 252 805 d'Automobiles Peugeot et Automobiles Citroën propose un train arrière à liaison élastique transversale précontrainte, qui fait apparaître, au delà d'un certain seuil d'accélération latérale, une rotation autour d'un point fictif, ce qui induit un effet sous-vireur provoqué par le train arrière du véhicule.

Cette solution implique le passage, sans progressivité, d'un état d'équilibre élastique à un autre, avec les variations provoquées de la trajectoire correspondante.

Une autre famille de perfectionnements utilise le passage d'une situation où les vibrations sont bien filtrées sous faibles efforts à une autre situation de filtrage, nettement plus rigide, dans laquelle les pièces élastiques acceptent les efforts importants de guidage grâce à une perte rapide de la flexibilité initiale sur une faible course ; ceci se traduit par une véritable fonction de butée, ayant comme inconvénient une perte du filtrage.

Des exemples de pièces à rigidité rapidement variable sont décrits dans les documents FR 898 055 de GETEFO qui en exprime le principe et FR 2 453 746 de General Motors qui en présente l'application à divers trains montés élastiquement sur véhicules.

Le passage d'une situation dans laquelle les vibrations sont très filtrées à une autre situation de liaison moins souple, constitue alors la solution du compromis recherché par les constructeurs, qui ne procure un bon filtrage que dans certaines circonstances.

Une troisième solution assure un filtrage privilégié dans deux directions, y compris celle, sensiblement verticale, portant la charge principale, avec l'inconvénient du maintien des liaisons élastiques de manière beaucoup plus rigide dans la troisième direction. Des réalisations pratiquement équivalentes sont ainsi proposées par les documents FR 2 621 664 de HUTCHINSON et FR 2 622 660 de CAOUTCHOUC MANUFACTURE ET PLASTIQUES ; l'un décrit l'usage d'une biellette articulée élastiquement à ses extrémités, l'autre, un câble métallique tendu, noyé dans le support élastomérique ; ces deux dispositifs assurent une rigidité monodirectionnelle élevée, associée à un bon niveau de filtrage dans toute autre direction.

Une quatrième voie - totalement différente - est proposée par l'emploi d'un dispositif dit "actif" modifiant les rigidités selon les circonstances.

Ainsi le document EP 0 290 328 de la Régie Nationale des Usines Renault préconise de faire varier la rigidité propre d'éléments de suspension, en particulier de support moteur, grâce à un alliage à mémoire de forme, noyé dans l'élastomère et dont un échauffement par passage de courant électrique peut faire basculer la rigidité du dispositif d'une raideur à une autre. L'instantanéité n'est pas le propre de ce dispositif, des moyens de commande électrique ne pourraient en assurer une réponse immédiate.

L'analyse de l'art antérieur montre, à l'évidence, que les solutions de liaison élastique, actuellement connues,- sont basées sur le déplacement passif du système élastique en conséquence d'accélérations exercées, ce qui se traduit par un déphasage entre l'application de la force et l'entrée en jeu, en réaction, de la rigidité appropriée. Il apparait donc qu'un dispositif qui réagit directement aux accélérations exercées - plus particulièrement latérales - et participe, de ce fait, au contrôle immédiat de la trajectoire du véhicule n'est pas connu.

La présente invention a donc pour objectif de remédier aux inconvénients rencontrés dans les diverses familles de pièces élastiques précédemment décrites, en mettant à profit le développement récent de capteurs d'accélération et d'actionneurs hydrauliques devenus courants dans la construction automobile.

L'invention consiste en un dispositif piloté de liaison élastique assurant le filtrage antivibratoire dans une même direction, suivant deux rigidités différentes, pour un train de suspension de véhicule, ledit dispositif comprenant des armatures rigides de fixation, intimement liées à un bloc en composition élastomérique qui les relie élastiquement.

L'invention est caractérisée en ce que ledit bloc en composition élastomérique comprend une chambre tubulaire piézo-raidie, c'est à dire déformable en l'absence de pression mais capable de bloquer la plus grande partie de la déformabilité transversale sous l'effet d'une pression hydraulique commandée par un relais actionneur et envoyée dans un ensemble tubulaire équipé d'embouts, dont au moins la chambre tubulaire piézo-raidie est noyée dans la masse dudit bloc en composition élastomérique.

L'invention résulte de l'association à des pièces de liaison élastique constituées d'armatures rigides, métalliques ou plastiques, intimement liées au cours de la vulcanisation à un bloc en composition élastomérique qui les relie élastiquement, d'une enceinte de faible volume celle-ci étant déformable en l'absence de pression mais devenant rigide sous l'effet d'une pression hydraulique importante, supérieure à toutes les contraintes rencontrées au sein du matériau et pilotée par un actionneur servant de relais hydraulique.

Le dispositif piloté de liaison élastique faisant l'objet de l'invention et ses variantes seront mieux compris à la lecture de la description accompagnant les dessins dans lesquels :

- la figure 1 est une coupe axiale, dans un plan transversal au véhicule, de la liaison élastique, dans une variante où la chambre tubulaire piézo-raidie est disposée parallèlement à l'axe vertical ;
- la figure 2 complète, par deux coupes perpendiculaires au plan de la figure 1, la variante précédente : la vue 2a est une coupe axiale, dans un plan longitudinal du véhicule, la vue 2b est une coupe horizontale dans la partie cylindrique du corps de la liaison élastique ;
- la figure 3 présente une variante de la liaison élastique comportant un ensemble tubulaire, équipé d'embouts, totalement noyé dans la masse du bloc en composition élastomérique ; la vue 3a et la vue 3b étant deux demi-coupes perpendiculaires, par des plans axiaux, la vue 3c étant une vue en plan.

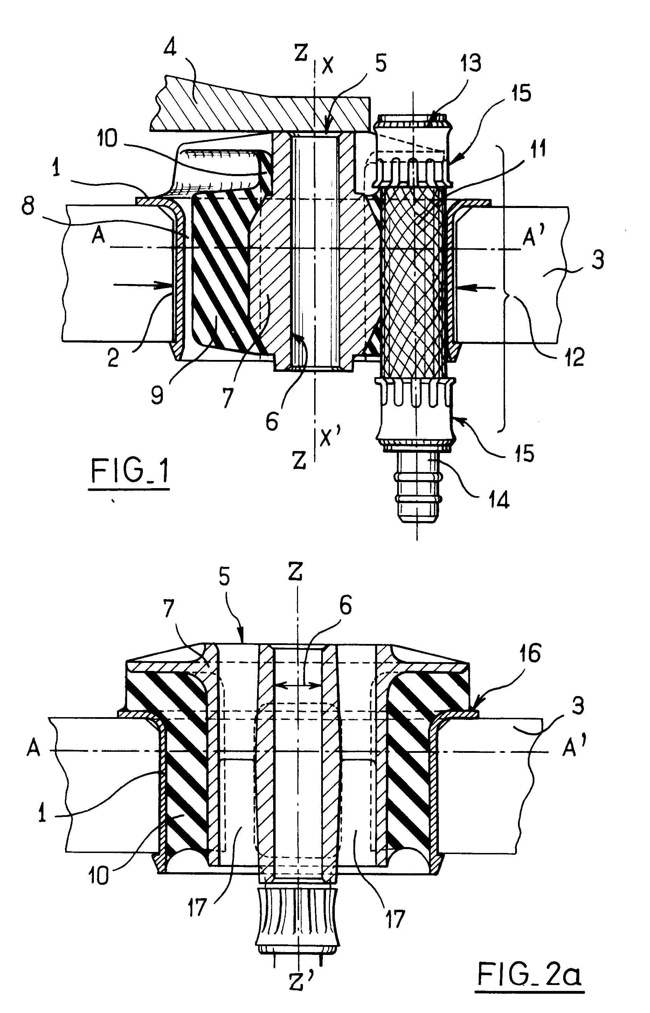

La figure 1 est une coupe axiale, dans un plan transversal au véhicule, d'une liaison élastique de train de suspension conforme à l'invention.

De forme générale sensiblement cylindrique, cette fixation des deux points avant, appliquée au cadre rigide supportant un train arrière de suspension, à bras tirés par exemple, assure une rigidité élevée dans la direction perpendiculaire à la figure, direction qui devient donc longitudinale après montage de la liaison élastique sur ledit cadre rigide du véhicule.

Ladite liaison élastique est, le plus commodément, emmanchée par son armature extérieure (1) dans un logement cylindrique (2) appartenant au cadre du train arrière (3). Une orientation au montage permet, en effet, d'optimiser la direction, sensiblement longitudinale, dans laquelle est souhaitée la plus forte rigidité qui assure, en particulier, la réaction aux efforts de freinage. Par contre, si un effort latéral s'applique aux supports avant comme arrière du cadre du train arrière (3), une légère rotation angulaire se cumule au déplacement transversal d'ensemble.

Dans ce cas, celle des directions horizontales souhaitée la plus souple par le constructeur n'est plus tout à fait transversale et l'orientation de l'armature extérieure (1) dans le logement cylindrique (2) peut être optimisée pour une plus grande flexibilité. Cette flexibilité est dite de lacet du cadre de train arrière (3) par rapport au chassis du véhicule (4), les rotations se produisant par rapport à un point fictif lointain à l'extérieur dudit cadre de train arrière (3).

Ledit chassis du véhicule (4) exerce une légère pesée, suivant l'axe ZZ', par appui sur la face supérieure (5) où il est boulonné par une vis (non représentée) traversant l'alésage de fixation (6) de l'armature interne (7). Si l'axe des roues est proche des fixations arrière du cadre de train arrière (3), mais à l'intérieur de son implantation, une charge permanente modérée autorise le choix d'une grande flexibilité verticale pour les fixations avant. En conséquence, une charge presque égale à celle des roues dicte le choix, pour les fixations arrière, de rigidités nettement plus élevées et donc moins filtrantes aux vibrations transmises par l'intermédiaire des bras de roues. Cependant, l'implantation des paliers à roulements desdits bras est proche des fixations avant du cadre de train arrière (3) ; aussi le "chemin de bruit" pour les vibrations est-il plus long, entre le moyeu de roue et les fixations les plus raides, qu'entre ledit moyeu de roue et les fixations avant, ce qui permet de rendre ces dernières nettement plus filtrantes.

Ceci explique le souhait d'une bonne flexibilité également dans le sens sensiblement transversal (qui est celui de la figure), en usage courant du véhicule.

Une possibilité de déplacement relatif est alors assurée par un jeu libre (8), ménagé entre l'armature extérieure (1) et un bossage servant de butée (9), élément constitutif du bloc en composition élastomérique (10). Un rapport des rigidités dans les deux directions horizontales de l'ordre de quatre est demandé par les constructeurs, la rigidité verticale ayant par exemple une valeur intermédiaire entre les deux rigidités horizontales.

Des mouvements relatifs d'excentrage entre armature extérieure (1) et armature interne (7), de 1 à 3 millimètres, étant rendus possibles par d'aussi grandes flexibilités, un remède proposé à une instabilité de direction, qui serait alors provoquée par la trop grande souplesse du train arrière, consiste à bloquer la possibilité de déplacement due au jeu libre (8) par une mise en pression pilotée de la chambre tubulaire piézo-raidie (11).

Dans la variante représentée, l'ensemble tubulaire équipé d'embouts (12) comporte une chambre tubulaire piézo-raidie (11), de forme cylindrique, noyée dans la masse du bloc en composition élastomérique (10).

Des embouts internes, l'un servant de bouchon d'extrémité (13), l'autre d'embout d'alimentation (14), engagés aux deux extrémités de la cavité de ladite chambre tubulaire piézo-raidie (11) et serrés par le sertissage d'un collier circonférentiel (15), assurent la fermeture étanche de l'ensemble tubulaire équipé d'embouts (12), capable de résister à une pression de fonctionnement élevée, pouvant atteindre 160 à 180 bars.

Ainsi, en usage normal, l'ensemble tubulaire équipé d'embouts (12) reste rempli de liquide, mais, en l'absence de pression, présente une grande flexibilité, dans la direction qui fait varier le jeu libre (8).

Sous l'effet d'une pression d'alimentation, actionnée par détection d'accélération latérale au moyen d'une logique adaptée, il se produit une remise au rond de la chambre tubulaire piézo-raidie (11) dont la forme était légèrement ovalisée au contact du bloc en composition élastomérique (10), et donc, simultanément, un déplacement de la position d'équilibre, annulant le jeu libre (8). De ce fait, entrent en contact le bossage servant de butée (9) et la face interne de l'armature extérieure (1) en regard.

La rigidité dans la direction sensiblement transversale, donc dans le plan de la figure, peut ainsi instantanément être notablement accrue, dans un rapport au moins égal à trois. Accessoirement, ces circonstances accroissent aussi, légèrement, la rigidité verticale.

Il est à remarquer que la mise au rond de la chambre tubulaire piézo-raidie (11), qui prend alors une grande raideur sous l'effet de la pression hydraulique, n'écrase pas, cependant, le bossage servant de butée (9) sur son appui, mais provoque une nouvelle position d'équilibre, indépendante de la valeur de la pression, dans laquelle une certaine flexibilité de filtrage est néammoins conservée. La pression élevée du liquide contenu dans l'ensemble tubulaire équipé d'embouts (12) n'a donc pas besoin d'être contrôlée avec précision et peut, par conséquent, n'être que la pression de commande d'un autre organe piloté, tel qu'un moyen de contrôle du roulis.

Le pilotage de la rigidité transversale ne demande donc pas de détection spécifique, mais s'inscrit dans les possibilités peu coûteuses offertes au constructeur pour maîtriser les élasticités de filtrage en fonction des circonstances.

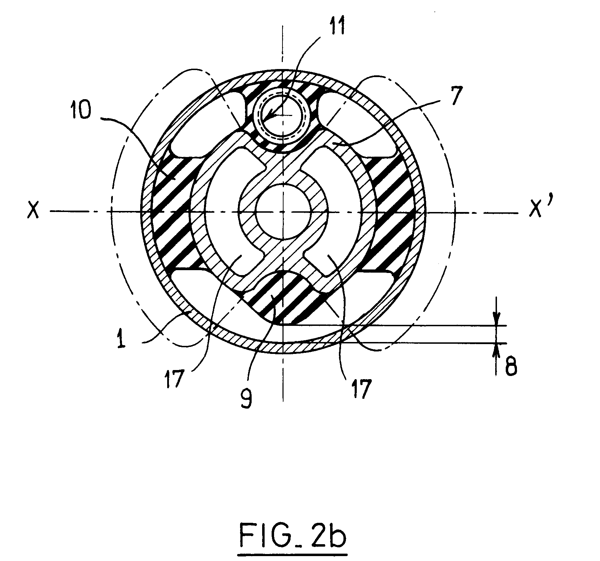

La figure 2 complète, par ses deux coupes perpendiculaires au plan de la figure 1, la variante précédemment décrite. La vue 2a est une coupe axiale, dans un plan sensiblement longitudinal du véhicule, indiquée par l'axe XX' en vue 2b, dans la direction de plus grande raideur permanente apportée par le bloc en composition élastomérique (10) à la liaison élastique.

La vue 2b est une coupe horizontale, à mi-hauteur du corps de ladite liaison élastique, par AA' sur la vue 2a, expliquant la raison de rigidités aussi différenciées.

La vue 2a montre la section pleine du bloc en composition élastomérique (10), dont le facteur de forme, rapport entre la surface libre et la surface frettée par les armatures extérieure (1) et interne (7), provoque une rigidité de compression et traction élevée, s'exerçant à travers la composition élastomérique.

La rigidité dans la direction verticale ZZ' fait appel, essentiellement, au cisaillement de la composition élastomérique et peut demeurer très filtrante, même si une collerette plane (16) assure un appui partiel, par compression de la partie supérieure du bloc en composition élastomérique (10), sur la face supérieure du cadre de train arrière (3).

L'action de la pesanteur, dans cette direction, exerce une contrainte statique modérée, par l'appui du chassis du véhicule (4) sur la face supérieure (5) de l'armature interne (7), la plus grande partie de la charge agissant sur les autres points de fixation du cadre du train arrière (3), situés à proximité des roues.

L'allègement toujours recherché peut conduire, préférentiellement, comme représenté, à donner une forme creuse (17) à ladite armature interne (7), de part et d'autre de l'alésage de fixation (6), sans modifier les caractéristiques intrinsèques de la liaison élastique.

La vue 2b représente, dans le plan horizontal de la coupe AA', une coupe de la liaison élastique dans laquelle le bloc en composition élastomérique (10) prend appui, pour les efforts exercés selon la direction XX', sur l'armature interne (7) au droit desdites forme creuses (17). Par ailleurs, dans la direction perpendiculaire, donc sensiblement transversale, le bossage servant de butée (9) peut se débattre dans le jeu libre (8), jusqu'à ce qu'il vienne en appui sur l'alésage de l'armature interne (1).

La chambre tubulaire piézo-raidie (11) de l'ensemble tubulaire équipé d'embouts (12) joue, par son ovalisation au cours de ce débattement, étant, au repos, dans une position légèrement aplatie due à son appui sur l'armature extérieure (1). L'armature interne (7) présente une forme creuse associée, restant symétrique par rapport au logement du bossage servant de butée (9).

La mise en pression interne élevée de la chambre tubulaire piézo-raidie (11) remet au rond sa section droite, et, exerçant quelques centaines de Newton de ce fait, déplace vers son contact avec l'armature extérieure (1) le bossage servant de butée (9) par cisaillement transversal, donc peu résistant, du bloc en composition élastomérique (10). Le filtrage, aussi bien dans la direction de l'effort latéral que dans le sens vertical, n'est pas anihilé avant que des efforts importants ne jouent sur l'effet de butée, mais la rigidité correspondante est, par exemple, triplée avant l'entrée en jeu de ces efforts importants.

En remarquant que l'entraxe des armatures internes (7) de chacune des liaisons élastiques gauche et droite est imposé par leur fixation sur le chassis du véhicule (4) et que l'entraxe des armatures extérieures (1) est imposé par les logements cylindriques (2) dans le cadre du train arrière (3), il apparaît que l'écrasement d'un bossage servant de butée (9) provoque une tendance à la traction des parois de la chambre tubulaire piézo-raidie (11) dans la fixation élastique opposée.

La rigidité élevée, réduisant le filtrage antivibratoire, n'est donc le fait que d'une seule fixation élastique, du côté supportant le plus de sollicitations sous l'effet du dévers, l'autre restant bien filtrante.

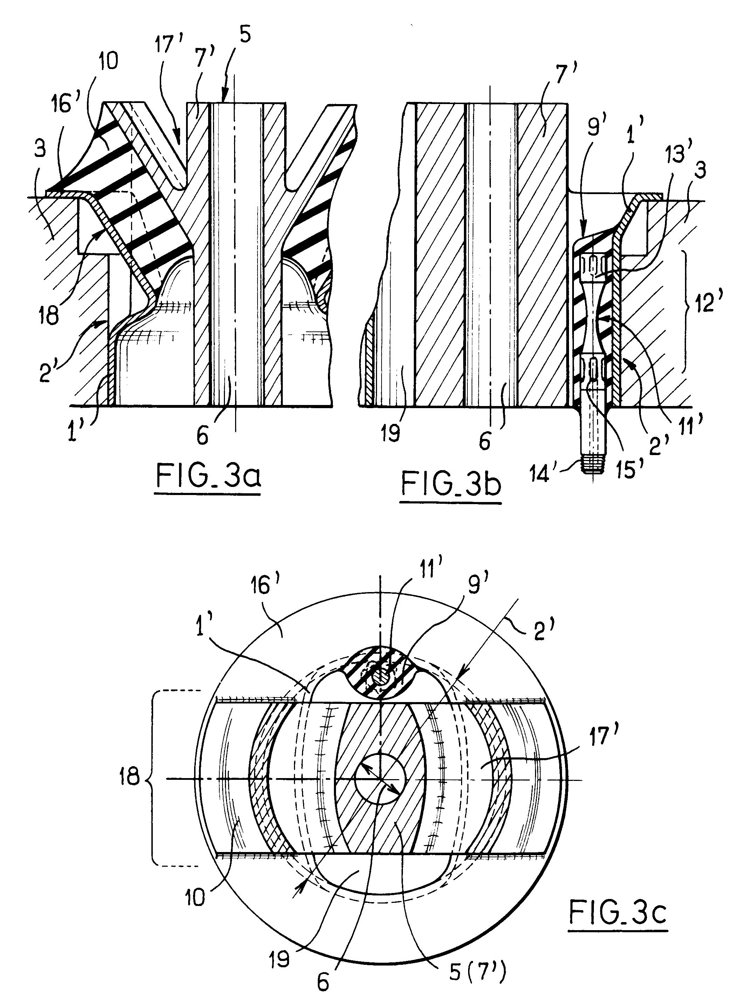

La figure 3 est afférente à une variante de fixation élastique, d'emploi analogue à la précédente, mais dont l'effet pratique diffère légèrement.

La vue 3a montre la section axiale partielle, valable dans la direction de plus grande rigidité, en principe longitudinale. La vue 3b est une coupe partielle, mais dans la direction perpendiculaire, donc sensiblement transversale. Une alvéole vide (19), qui y est représentée partiellement, située à l'opposé de la chambre tubulaire piézo-raidie (11) est rendue plus explicite par la vue en plan 3c.

La forme de l'armature extérieure (1') s'inscrit dans un logement cylindrique (2') du cadre de train arrière (3), où la fixation élastique est emmanchée verticalement, jusqu'à venir en butée sur le bord supérieur dudit logement cylindrique (2'), par la collerette plane (16'). Une zone conique (18) est cependant ménagée dans le bloc en composition élastomérique (10) ; elle résulte d'un emboutissage localisé de l'armature extérieure (1') et de la forme, en général venue de moulage de l'armature interne (7') pour la surface en regard. Ainsi, des deux côtés de l'axe, sur deux portions de la circonférence de l'armature extérieure (1'), d'une longueur de l'ordre d'un quart du périmètre chacune, entre les deux surfaces rigides en regard, deux parties coniques, d'épaisseur sensiblement constante, constituent le bloc en composition élastomérique (10), et lui confèrent un facteur de forme notable. La rigidité qui en résulte est capable de supporter une composante verticale importante de la charge appliquée par le chassis du véhicule (4) sur la face supérieure (5) de l'armature interne (7'), qui est associée audit chassis, par un boulonnage au travers de l'alésage de fixation (6).

Ladite armature interne (7') présente deux formes creuses (17') qui assurent le raccordement de ladite forme conique avec la partie cylindrique entourant l'alésage de fixation (6), pour assurer un allègement maximal.

Dans la disposition représentée en coupe transversale 3b, une alvéole vide (19), ménagée entre armatures extérieure (1') et interne (7'), est située à l'opposé d'un bossage servant de butée (9'), seul sollicité, en réalité, lors des accélérations transversales.

A l'intérieur dudit bossage servant de butée (9') est inclus noyé, un ensemble tubulaire équipé d'embouts (12'), incorporé avec son bouchon d'extrémité (13') et son embout d'alimentation (14') à l'intérieur du bloc en composition élastomérique (10).

Lorsque l'effort latéral vient mettre en appui le bossage servant de butée (9'), cette fois-ci sur le corps de l'armature interne (7'), c'est directement du côté sollicité de la composition élastomérique, et non plus en position antagoniste, que la mise en pression de la chambre tubulaire piézo-raidie (11') accroit la rigidité propre du bossage servant de butée (9'). En l'absence de la pression activée par la logique appropriée, la déformabilité de la chambre tubulaire piézo-raidie (11') permet au bossage servant de butée (9') de fléchir en cas de besoin jusqu'à l'aplatissement par pincement de ladite chambre tubulaire piézo-raidie (11').

Cette déformation accompagne la flexion de la fixation élastique, l'ensemble ainsi constitué présentant une rigidité dans le sens traversal, par exemple trois fois plus faible, en ce cas, que lorsque la pression est activée.

Par ailleurs, la déformabilité entre l'armature extérieure (1') et l'armature interne (7') suivant les deux circonstances, - absence de pression ou mise au rond de la chambre tubulaire piézo-raidie (11') par la pression, - est géométriquement plus notable que dans la variante précédemment décrite et est susceptible de modifier l'épaisseur du bossage servant de butée (9') avant son entrée en contact.

En effet, la chambre tubulaire piézo-raidie (11') se trouve rétreinte, radialement, donc de diamètre réduit par rapport à son diamètre initial.

Dans la présente variante, malgré une disposition analogue à celle de la variante précédente, c'est le raidissement du bossage servant de butée (9') qui apporte le changement de comportement aux microbraquages du train, sans modification de la position d'équilibre assurée par le centrage élastique des deux armatures. Cette variante peut donc s'avérer moins sensible aux fluctuations de la pression de commande que la précédente.

Dans des variantes non représentées, la même possibilité de variation de rigidité peut être assurée par une chambre tubulaire piézo-raidie de forme coudée ou repliée en forme de U. De même, des variantes de positionnement de ladite chambre piézo-raidie, au sein du bloc en composition élastomérique (10), peuvent faire appel à des orientations différentes de la verticale.

La fabrication de la liaison élastique assurant le filtrage antivibratoire d'un train de suspension, selon l'invention, utilise les procédés classiques de moulage bien connus de l'industrie de transformation du caoutchouc, dans lesquels sont intimement liés, par réaction in situ au cours de la vulcanisation, des armatures rigides et un bloc en composition élastomérique. Pour ce faire, les faces concernées de l'armature extérieure (1) ou (1') et de l'armature interne (7) ou (7') sont éventuellement enduites des colles nécessaires et placées, avec la composition élastomérique, dans le moule approprié. Le moulage diffère légèrement suivant la variante de liaison élastique à réaliser.

Pour la variante objet des figures 1 et 2, une longueur donnée de la chambre tubulaire piézo-raidie (11) est engagée sur un mandrin, lui-même solidaire du moule ; ledit mandrin constitue un noyau provisoire interne qui doit supporter la pression de moulage et éviter, ainsi, l'écrasement de ladite chambre tubulaire piézo-raidie (11).

Dans la réalisation de la variante objet de la figure 3, la chambre tubulaire piézo-raidie (11') est, préalablement au moulage, associée à un bouchon d'extrémité (13') et à un embout d'alimentation (14'), constituant ainsi l'ensemble tubulaire équipé d'embouts (12'), rendu étanche par le sertissage des colliers circonférentiels (15'). Un mandrin interne de diamètre nécessairement inférieur à celui de la chambre tubulaire piézo-raidie (11') est enfilé avec les jeux nécessaires à l'intérieur de cet ensemble par l'embout d'alimentation (14'). Ledit mandrin constitue un noyau interne et limite l'écrasement de l'ensemble tubulaire équipé d'embouts (12'), localement rétreint par le sertissage préalable desdits colliers circonférentiels (15'). Lors du remplissage du moule, c'est cet ensemble qui est noyé dans la composition élastomérique du bossage servant de butée (9'), élément constitutif du bloc en composition élastomérique (10).

Suivent les étapes de vulcanisation du bloc en composition élastomérique (10) et sa liaison intime simultanée avec les armatures extérieure (1) ou (1') et interne (7) ou (7'), de démoulage et de désengagement du mandrin interne.

Dans la variante objet des figures 1 et 2, le montage postérieur sur la chambre tubulaire piézo-raidie (11) du bouchon d'extrémité (13) et de l'embout d'alimentation (14), par le sertissage de leurs colliers circonférentiels (15) constitue l'ensemble tubulaire équipé d'embouts (12), élément essentiel de la liaison élastique selon l'invention.

En résumé, le dispositif piloté de liaison élastique selon l'invention présente les avantages suivants :
- il apporte aux conditions de conduite confort et sécurité ;
- il se substitue, sans modification, aux fixations élastiques passives de train de suspension selon l'art antérieur, et permet, de ce fait, la réalisation de variantes de suspension dans une même gamme de véhicules ;
- il ne nécessite pas de détection spécifique d'accélération latérale mais peut s'inclure, à faible surcoût, dans un circuit de pilotage actif des différentes rigidités de filtrage ;
- sa mise en oeuvre est tolérante sur la valeur de la pression de commande, par un effet de tout ou rien, lui permettant de passer instantanément d'une rigidité de pièce à une autre rigidité.

L'homme de l'art peut, sans sortir du cadre de l'invention, utiliser l'une ou l'autre variante avec pilotage, assurant la haute pression de commande d'un côté seulement, ou des deux simultanément, provoquant déplacement de la position d'équilibre ou non, avec sélection de deux valeurs possibles de rigidités, selon l'application, quelles que soient la forme et l'orientation de la chambre tubulaire piézo-raidie.

## Revendications

1. Dispositif piloté de liaison élastique assurant le filtrage antivibratoire dans une même direction, suivant deux rigidités différentes pour un train de suspension de véhicule, ledit dispositif comprenant des armatures rigides de fixation, intimement liées à un bloc en composition élastomérique qui les relie élastiquement, caractérisé en ce que ledit bloc en composition élastomérique (10) comporte une chambre tubulaire piézo-raidie (11) (11'), c'est à dire déformable en l'absence de pression, mais capable de bloquer la plus grande partie de la déformabilité transversale, sous l'effet d'une pression hydraulique commandée par un relais actionneur et envoyée dans un ensemble tubulaire équipé d'embouts (12) (12'), dont au moins la chambre tubulaire piézo-raidie (11) (11') est noyée dans la masse dudit bloc en composition élastomérique (10).

2. Dispositif piloté de liaison élastique selon la revendication 1, caractérisé en ce que seule la chambre tubulaire piézo-raidie (11), est noyée dans le bloc en composition élastomérique (10), et en ce qu'elle est disposée à l'opposé d'un bossage servant de butée (9), qui vient, sous l'effet de la pression de commande, annuler le jeu libre (8) en prenant contact avec l'alésage de l'armature extérieure (1), la rigidité transversale étant ainsi multipliée au moins par trois par rapport à celle du dispositif en l'absence de pression.

3. Dispositif piloté de liaison élastique selon la revendication 1, caractérisé en ce que l'ensemble tubulaire équipé d'embouts (12') est noyé dans le bloc en composition élastomérique (10) et en ce qu'il est inclus dans le bossage servant de butée (9'), rendant, après le contact dudit bossage servant de butée (9') sur l'alésage de l'armature extérieure (1'), la rigidité transversale au moins trois fois plus élevée sous l'effet de la pression de commande qu'en l'absence de celle-ci.

4. Dispositif piloté de liaison élastique selon l'une des revendications 2 ou 3, caractérisé en ce que l'armature interne (7) (7') comporte, de part et d'autre de l'alésage de fixation (6), une forme creuse (17) (17'), permettant un allègement du dispositif.

5. Dispositif piloté de liaison élastique selon la revendication 3, caractérisé en ce qu'une alvéole vide (19), ménagée entre l'armature extérieure (1') et l'armature interne (7'), est située à l'opposé du bossage servant de butée (9').

6. Dispositif piloté de liaison élastique selon l'une des revendications 1 à 5, caractérisé en ce que la chambre tubulaire piézo-raidie (11) (11') présente une forme coudée.

7. Dispositif piloté de liaison élastique selon l'une des revendications 1 à 5, caractérisé en ce que la chambre tubulaire piézo-raidie (11) (11') est repliée en forme de U.

8. Dispositif piloté de liaison élastique selon l'une des revendications 1 à 7, caractérisé en ce que l'orientation de la chambre tubulaire piézo-raidie (11) (11') au sein du bloc en composition élastomérique (10) est différente de la verticale.

FIG_1

FIG_2a

FIG. 2b

FIG. 3a

FIG. 3b

FIG. 3c

EP 0 519 789 A1

**Office européen des brevets**

# RAPPORT DE RECHERCHE EUROPEENNE

Numero de la demande

EP 92 40 1624

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 703 618 (OPEL)<br>* colonne 6, ligne 48 - colonne 7, ligne 23; figures 2,3 *<br>--- | 1 | F16F13/00<br>F16F1/38<br>B60G17/027<br>B60G7/00 |
| A | PATENT ABSTRACTS OF JAPAN<br>vol. 10, no. 115 (M-474)30 Avril 1986<br>& JP-A-60 244 608 ( NISSAN ) 4 Décembre 1985<br>* abrégé *<br><br>----- | 1 | |

**DOMAINES TECHNIQUES RECHERCHES (Int. Cl.5)**

F16F
B60G
F16C

Le présent rapport a été établi pour toutes les revendications

| Lieu de la recherche | Date d'achèvement de la recherche | Examinateur |
|---|---|---|
| BERLIN | 11 SEPTEMBRE 1992 | BROYDE M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

11